# EUROPÄISCHE PATENTSCHRIFT

(11) **EP 3 746 380 B1**
(45) Veröffentlichungstag und Bekanntmachung des Hinweises auf die Patenterteilung: **26.07.2023**
(21) Anmeldenummer: 19706362.1
(22) Anmeldetag: 01.02.2019
(51) Int. Cl.: B65G 21/14, B65G 23/44

(54) **BANDFÖRDERER, INSBESONDERE WÄGEBANDFÖRDERER**
BELT CONVEYOR, PARTICULARLY WEIGHING BELT CONVEYOR
CONVOYEUR À BANDE, EN PARTICULIER CONVOYEUR PESEUR À BANDE

(30) Priorität: 02.02.2018 DE 202018100599 U
(43) Veröffentlichungstag der Anmeldung: 09.12.2020
(73) Patentinhaber: WIPOTEC GmbH, 67657 Kaiserslautern (DE)
(72) Erfinder: BLAUTH, Thorsten, 67734 Katzweiler (DE)
(74) Vertreter: Eder Schieschke & Partner mbB
(86) Internationale Anmeldenummer: PCT/DE2019/100105
(87) Internationale Veröffentlichungsnummer: WO 2019/149322

(56) Entgegenhaltungen:
- DE-A1- 3 143 937
- DE-C2- 19 618 506
- GB-A- 1 240 123
- US-A- 5 101 980
- US-A- 5 186 313
- US-A- 5 947 264
- US-A1- 2002 029 998

## Beschreibung

Die Erfindung betrifft ein Förderband, insbesondere Wägebandförderer, für ein zu förderndes Gut mit den Merkmalen des Oberbegriffs des Anspruchs 1.

Bandförderer, die mit nicht oder wenig flexiblen Gurten ausgerüstet sind, weisen meist eine Gurtspannvorrichtung auf. Diese wird benutzt, um den üblicherweise als Endlosband über mindestens zwei Wellen geführten und üblicherweise durch die Antriebswelle (oder einen Traktorantrieb) angetriebenen Transportgurt zu spannen. Ein derartiger Bandförderer ist beispielsweise aus der US 5,101,980 A bekannt.

Aus der DE 196 18 506 C2 ist bekannt, die mitlaufende Welle an beiden seitlichen Lagerstellen separat in Förderrichtung zu verschieben, um den Gurt zu spannen und den Geradeauslauf einzujustieren. Dieser Vorgang erfolgt bei der Herstellung des Bandförderers, kann aber auch im Feldeinsatz erforderlich werden, wenn z.B. Alterung oder Temperatureffekte den Geradeauslauf oder die Gurtspannung unerwünscht verändern. Ein Bandförderer mit den Merkmalen des Oberbegriffs des Anspruchs 1 ist aus der US 5, 947,264 A bekannt.

Neben dem, je nach Bandgröße verschiedenen, nur wenige Millimeter oder Zentimeter betragenden, mechanischen Verschieben der Lagerstelle(n) beim Spannen des Gurtes ist beim Montieren oder Demontieren des Gurtes auf den bzw. herunter von dem Bandkörper auch ein deutlich größerer Verstellweg beim Verschieben der Lagerstellen erforderlich.

Bei einer Vielzahl von Transportbändern wird ein seitlicher Eingreifschutz gefordert, der den seitlichen Zugang zum gesamten Band verhindert, um Bedienpersonal zu schützen. Hierdurch sind die bekannten und typisch seitlich zugänglichen Angriffsstellen für die Verstellvorrichtung der Lagerstellen nicht mehr zugänglich, wodurch ein Nachjustieren von im Feldeinsatz in Transportstrecken oder in größere Maschinen eingebauten Förderbändern nur nach Demontage der seitlichen Schutzabdeckungen möglich ist. Hierdurch wird jedoch die Sicherheit beeinträchtigt, zumal die Justage nur bei (bevorzugt mit maximaler Geschwindigkeit) drehenden Wellen möglich ist.

Auch wenn mehrere Transportbänder seitlich nebeneinander stehend eng aneinander gereiht platziert sind, ist ein seitlicher Verstellmechanismus nicht mehr zugänglich, ohne größere Anlagenteile zu demontieren.

Da sich an einen Bandförderer, insbesondere einen Wägebandförderer, meist weitere Bandförderer anschließen, sind auch von vorn zugängliche Angriffsstellen für die Verstellvorrichtung der Lagerstellen nicht mehr zugänglich.

Der vorliegenden Erfindung liegt daher die Aufgabe zugrunde, einen Bandförderer, insbesondere einen Wägebandförderer mit einer Einstellvorrichtung bzw. einer Verstellvorrichtung zu schaffen, die eine Justage der Bandspannung auch nach Montage des Endlosbands ermöglicht, ohne die Sicherheit zu beeinträchtigen.

Diese Aufgabe wird erfindungsgemäß durch einen Bandförderer, insbesondere Wägebandförderer mit den Merkmalen des Anspruchs 1 sowie durch eine Einstellvorrichtung zum Einsatz in einem derartigen Bandförderer mit den Merkmalen des Anspruchs 10 gelöst.

Durch das Vorsehen einer Einstellvorrichtung, die ein Einstellelement aufweist, dessen Rotationsachse in Bezug zur Förderebene von schräg oben oder unten in einem Winkel größer als 0° und kleiner als 90° liegt, wird nunmehr eine Justage (Einstellen der Spannung des Endlosbands als auch des Geradeauslaufs) auch nach Montage des Endlosbands ermöglicht, ohne dass eine Demontage seitlicher Schutzeinrichtungen erforderlich wäre.

Die Bedienung der Einstellvorrichtung von schräg oben oder unten erfolgt dann über geeignete Werkzeuge, wie beispielsweise Steckschlüssel, Innensechskantschlüssel, Schraubendreher etc., die das drehbare Einstellelement (beispielsweise eine Schraube, Spindel oder Exzenter) drehen.

Dabei soll im Rahmen der gesamten Beschreibung sowie der Ansprüche der vorliegenden Erfindung der Begriff Endlosband dahingehend verstanden werden, dass es sich sowohl um endlos gefertigte, z.B. endlos gespritzte, als auch um an einer oder mehreren Nahtstellen zusammengefügte, z.B. verschweißte, Bänder handeln kann.

Zudem steht der Begriff "Endlosbänder" im Sinne der Erfindung für alle Arten von umlaufenden Bändern wie Gurte, Ketten, Riemen, Traktorbänder, insbesondere mit seitlicher Lochführung, mehrere Einzelbänder, so dass der Begriff "Endlosband" insbesondere nicht auf ein durchgehendes, einzelnes Band beschränkt ist.

Durch die Einstellvorrichtung kann der Abstand von zwei Rollen, die in Förderrichtung an den Enden der Aufnahmeplatte oder an den Enden des wenigstens einen Längsträgers angeordnet sind, auf ein zum Spannen des Bandes, insbesondere dessen Obertrums, erforderliches (Längen-)maß bzw. Entfernung eingestellt werden. Selbstverständlich können Bandförderer auch zusätzlich zu den vorgenannten (End-)Rollen weitere Rollen, insbesondere zur Bandführung umfassen, ohne dass die erfindungsgemäße Wirkung der Einstellung des Verschiebewegs und damit der Bandspannung hierdurch beeinträchtigt ist.

Unter dem Begriff "Aufnahmeplatte" ist im Sinne der Erfindung jegliche Art von dicken (auch Hohlkörpern) und dünnen Platten zu verstehen, auch wenn derartige Platten keine Rahmenkonstruktion mit darin enthaltenen Längsträgern aufweisen.

Die Einstellvorrichtung kann an einem Ende der Platte oder am Ende des wenigstens einen Längsträgers oder in innerhalb dieses Längsträgers (diesen unterteilend oder auch teleskopartig) angeordnet sein.

Der Begriff "Rolle" umfasst im Sinne der Erfindung nicht nur einen durchgehenden Rollkörper, sondern auch mehrere, entlang einer (unterbrochenen oder durchgehenden) Achse angeordnete, unter Umständen beabstandete Rollkörper, die als Rolle wirken.

In weiterer Ausgestaltung der Erfindung liegt die Rotationsachse des Einstellelements im Wesentlichen senkrecht zur Rollenachse, so dass ein Betätigen des Einstellelements weder durch ein möglicherweise erhöhtes Band bzw. dessen Rand noch durch eine eventuell vorhandene hohe Seitenabdeckung beeinträchtigt wird, die die Einstellvorrichtung in ihrer Höhe senkrecht zur Förderebene überragen.

In bevorzugter Ausgestaltung der Erfindung ist die Einstellvorrichtung (mit oder ohne Übersetzung) als Keilgetriebe ausgebildet, mit einem abtriebsseitigen ersten Element, das in Richtung des Verschiebewegs wirkt, und einem als antriebsseitiges zweites Element ausgebildeten Einstellelement, das das erste abtriebsseitige Element unter einem Winkel größer 0° und kleiner 90°, vorzugsweise kleiner 45°, insbesondere kleiner gleich 30° und im Wesentlichen senkrecht zur Rollenachse kraftübertragend angreift.

Durch diese Ausbildung kann auf einfache Weise, bevorzugt mit einer Untersetzung, eine Umlenkung der Wegänderung des Einstellelements erfolgen, wobei selbstverständlich auch andere Arten der Umlenkung (Spindel mit flexibler Welle oder Kardangelenk, etc.) denkbar sind.

In weiterer vorteilhafter Ausgestaltung der Erfindung weist das Keilgetriebe eine im Querschnitt keilförmige wirksame Fläche bzw. Steigung mit einem Winkel kleiner gleich 45°, vorzugsweise kleiner gleich 30° auf. Die wirksame Keilform kann hierbei am jeweiligen Ende des ersten oder zweiten Elements oder an beiden Enden angeordnet sein, so dass eine größere Wegänderung des ersten antriebsseitigen Elements eine kleinere Wegänderung des zweiten abtriebsseitigen Elements bewirkt.

Selbstverständlich kann die Keilform bzw. Größe des wirksamen Winkels in Abhängigkeit der Dehnbarkeit des Endlosbandes gewählt werden. So kann für elastischere Bänder ein größerer Winkel und damit größere mögliche Wegänderung des abtriebsseitigen zweiten Elements gewählt werden. Eine größere Wegänderung kann aber auch durch eine verschleißbedingte Dehnung eines älteren Bandes bedingt sein, so dass durch einen Austausch der in besonderer Ausgestaltung der Erfindung eigenständigen Einstellvorrichtung (Modul) diesem Umstand Rechnung getragen werden kann.

In besonders bevorzugter Ausgestaltung der Erfindung ist der Rahmen aus zwei Längsträgern und zwei Querträgern aufgebaut, wobei zwei Einstellvorrichtungen an den Enden der Längsträger angeordnet sind. Durch diese Konstruktion kann die erforderliche Stabilität, insbesondere für einen Wägebandförderer, trotz geringen Eigengewichts (insbesondere um ein schnelles Einschwingen zu ermöglichen) erreicht werden. Zusätzlich ist es denkbar, an oder auf dem Rahmen eine Auflageplatte zur Unterstützung des das zu fördernde Gut tragenden oberen Trums des Endlosbands anzuordnen, was auch die Stabilität des Rahmens weiter erhöht.

Wie bereits vorstehend angedeutet, kann die als eigenständiges Modul ausgebildete Vorrichtung zur ortsfesten Verbindung mit dem Rahmen oder der Platte hierzu komplementäre Befestigungsmittel aufweisen.

So können als Längsträger vorteilhafterweise Seitenholme verwendet werden, die aus je nach gewünschter Bandlänge abgelängten Strangpressprofilen (vorzugsweise Aluminiumstrangpressprofile) bestehen. Zwei eigenständige Module können dann an zwei Enden der Längsträger beispielsweise mittels Schrauben befestigt werden, wobei die hierfür notwendigen Bohrungen vorteilhafterweise im Strangpressprofil bereits vorgesehen sein können. Für die Endmontage werden allenfalls Gewinde in die vorhandenen Bohrungen geschnitten, wobei auch selbstschneidende Gewindeschrauben zur Befestigung des Moduls verwendet werden können.

In weiterer Ausgestaltung der Erfindung verbindet die als eigenständiges Modul ausgebildete Einstellvorrichtung aneinander grenzende Längs- und Querträger des Rahmens miteinander, was vorteilhafterweise eine weitere Vereinfachung der Konstruktion und der Montage ermöglicht. Die Verbindung der beiden Module mit den Enden eines Querträgers kann hierbei in gleicher Weise, wie vorstehend im Falle eines Längsträgers beschreiben, erfolgen, so dass auch die Querträger vorteilhafterweise aus je nach gewünschte Bandbreite abgelängten Strangpressprofilen (vorzugsweise Aluminiumstrangpressprofile) gefertigt werden können.

In besonders vorteilhafter Ausgestaltung der Erfindung liegt die als eigenständiges Modul ausgebildete Einstellvorrichtung alleinig zwischen Rahmen oder Platte und Rolle bzw. deren Lager, so dass die Kraftübertragung von Rahmen zu Rolle nur über das Modul und allenfalls das Rollenlager erfolgt. Hierbei kann das Rollenlager auch in das Modul integriert sein.

Die erfindungsgemäß als eigenständiges Modul ausgebildete Einstellvorrichtung weist zur (orts-)festen Verbindung mit dem Rahmen oder der Platte hierzu komplementäre Befestigungsmittel, wie beispielsweise wenigstens eine Führungsbolzen, Bohrungen für Schrauben, etc. auf, um auf einfache und schnelle Art und Weise auch vor Ort bzw. im Einsatz montiert, ausgetauscht oder nachgerüstet zu werden.

Durch die verschiedenen Ausgestaltungen der Erfindung wird unabhängig voneinander vorteilhafterweise eine Bedienung der Einstellvorrichtung bzw. Verstellvorrichtung von oben oder unten ermöglicht, ohne dass hierfür eine Demontage seitlicher Schutzeinrichtungen oder nebeneinander angeordneter Bandförderer erforderlich ist. Weiterhin ermöglicht die Erfindung einen relativ großen Verstellweg (im Schwerlastbereich z.B. 25 mm) in Förderrichtung, um die Montage/Demontage des Endlosbands zu erleichtern. Gleichzeitig wird durch die Erfindung dennoch eine Feinjustage ermöglicht, um den Geradeauslauf des Bands justieren zu können.

Das erfindungsgemäße Vorsehen einer Einstellvorrichtung generiert ein allenfalls geringes Zusatzgewicht, so dass die Erfindung auch als Wägebandförderer bzw. in Wägebändern benutzt werden kann, bei welchen bekanntlich möglichst wenig Vorlast auf dem Wägesensor erwünscht ist, um ein möglichst schnelles Einschwingen zu ermöglichen.

Als eigenständiges Modul kann die erfindungsgemäße Einstellvorrichtung in vorhandenen Bandkonstruktionen eingesetzt werden und als Nachrüstung in bestehende Baukastensysteme aufgenommen werden, ohne die Variantenvielfalt der Grundmodule wesentlich zu erhöhen.

Weitere vorteilhafte Ausgestaltungen der Erfindung ergeben sich aus den abhängigen Ansprüchen.

Die Erfindung wird nachfolgend anhand eines in der Zeichnung dargestellten Ausführungsbeispiels näher erläutert.

In der Zeichnung zeigen:
- Fig. 1: eine perspektivische Ansicht eines Wägebandförderers mit einer erfindungsgemäßen Einstellvorrichtung;
- Fig. 2: eine perspektivische Detailansicht einer Wägeauflage (in Form eines Bandförderes) des Wägebandförderers nach Fig. 1;
- Fig. 3: eine teilgebrochene vergrößerte perspektivische Ansicht einer Einstelleinrichtung nach Fig. 2;
- Fig. 4: eine gebrochene Seitenansicht der Einstellvorrichtung nach Fig. 3:
- Fig. 5: eine perspektivische Ansicht eines Rahmens;
- Fig. 6: einen Rahmen nach Fig. 5 mit zusätzlicher Auflageplatte;
- Fig. 7: eine perspektivische Ansicht einer separaten Einstellvorrichtung;
- Fig. 8: eien Vorderansicht einer Einstellvorrichtung nach Fig. 7; und
- Fig. 9: eine Schnittansicht einer Einstellvorrichtung entlang der Linie A-A in Fig. 8.

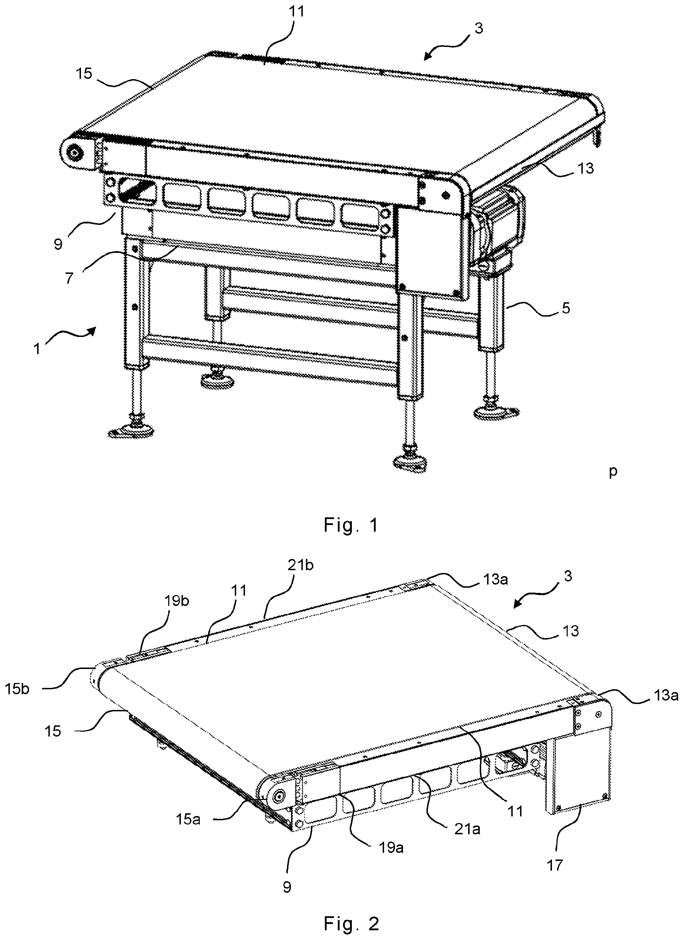

Der in Fig. 1 dargestellte Wägebandförderer 1 umfasst einen Auflagetisch 5 bzw. ein Tischgestell, eine Wägezelle 7 und ein Wägeauflage 3 bzw. eine Wägeplattform in Form eines Bandförderers, der insgesamt, beispielsweise über sein Trägerteil 9, auf der Wägezelle 7 aufliegt oder aufgesetzt ist. Ein Signal der Wägezelle 7, welches von der durch das Gewicht des Bandförderers 3 gebildeten Vorlast und einem auf dem Bandförderer 3 bzw. auf dessen Endlosband 11 befindlichen Gut bestimmt ist, wird einer nicht dargestellten Auswerte- und Steuereinheit zugeführt, welche aus dem Signal der Wägezelle 7 das Gewicht ermittelt.

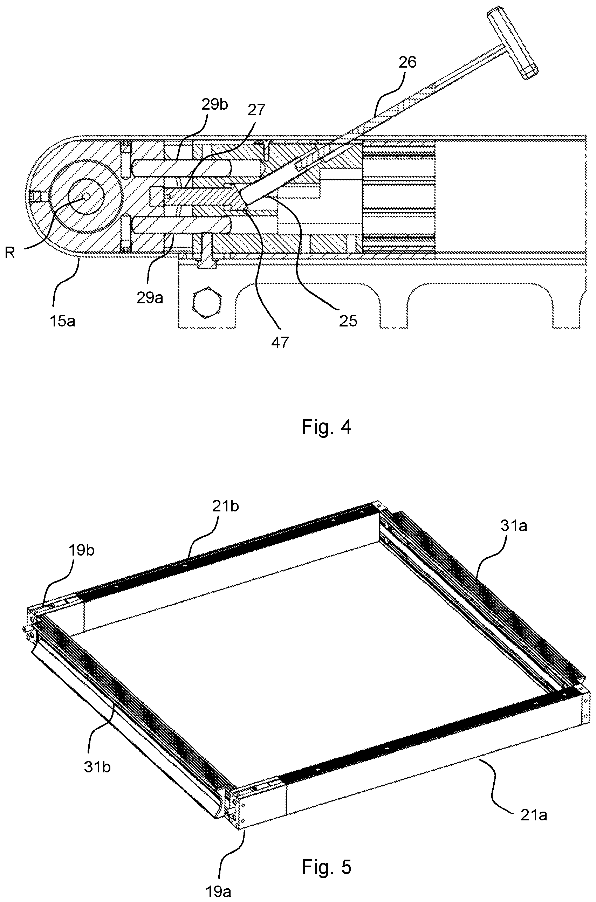

Der Bandförderer 3 besteht im Wesentlichen aus einem rechteckigen, aus Querträgern 31a,b (siehe Fig. 5) und Längsträgern 21a,b gebildeten Rahmen, an dessen Stirnseiten in Förderrichtung jeweils Rollen 13 und 15 über Rollenlager 13a,b und 15a,b rotierbar um eine Rollenachs R angeordnet sind. Um diese Rollen 13, 15 ist ein Endlosband 11 geführt.

Wie aus Fig. 2 ersichtlich, wird die Rolle 13 von einem Antrieb 17 in nicht näher dargestellter Weise angetrieben, um über das Endlosband eine Förderbewegung zu bewirken.

Zum Einstellen einer gewünschten und erforderlichen Bandspannung des Endlosbands 11 sind in dem Rahmen auf Seiten der nicht angetriebenen Rolle 15 zwischen den jeweiligen Enden der Längsträger 21a und 21b und den zugehörigen Rollenlagern 15a und 15b zwei Einstellvorrichtungen in Form von Spannböcken 19a und 19b angeordnet.

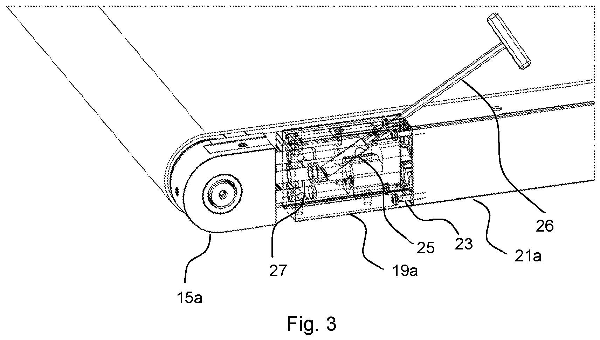

Wie aus Fig. 3 und Fig. 4 ersichtlich, ist die Einstellvorrichtung 19a (und in gleicher Weise die vorzugsweise symmetrisch oder gar baugleich ausgebildete Einstellvorrichtung 19b) mittels beispielsweise vier Schrauben 23 am stirnseitigen Ende des Längsträgers 21a befestigt. An der gegenüberliegenden Seite der Einstellvorrichtung 19a ist das Rollenlager 15a (ausschließlich) in Förderrichtung und Längsrichtung des Längsträgers 21a verschiebbar gelagert.

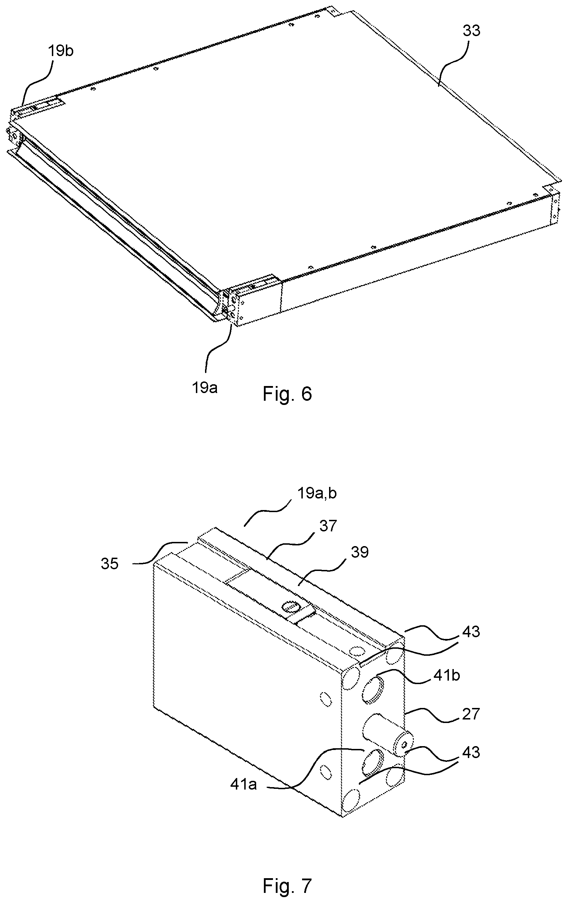

Hierzu weist die Einstellvorrichtung 19a, wie aus den Fig. 7 bis Fig. 9 ersichtlich, Bohrungen 41a,b in Längsrichtung auf, in welche aus dem Rollenlager 15 in dieser Längsrichtung ragende Führungsbolzen 29a,b eingreifen. Durch diese Führungsbolzen wird ein Verschieben in Längsrichtung des Längsträgers 21a bzw. in Förderrichtung ermöglicht, und andere unerwünschte Bewegungsrichtungen (inklusive Drehbewegungen) der Rollenlager 15a,b und damit der Rolle 15 werden verhindert.

In der Einstellvorrichtung ist ein Spannstab 27, vorzugsweise mittig und zentral in der Stirnseitenfläche des Spannbocks 19a,b, angeordnet, welcher in Förderrichtung bewegbar ist, um das Endlosband 11 zu spannen oder beispielsweise zu Demontagezwecken zu entspannen.

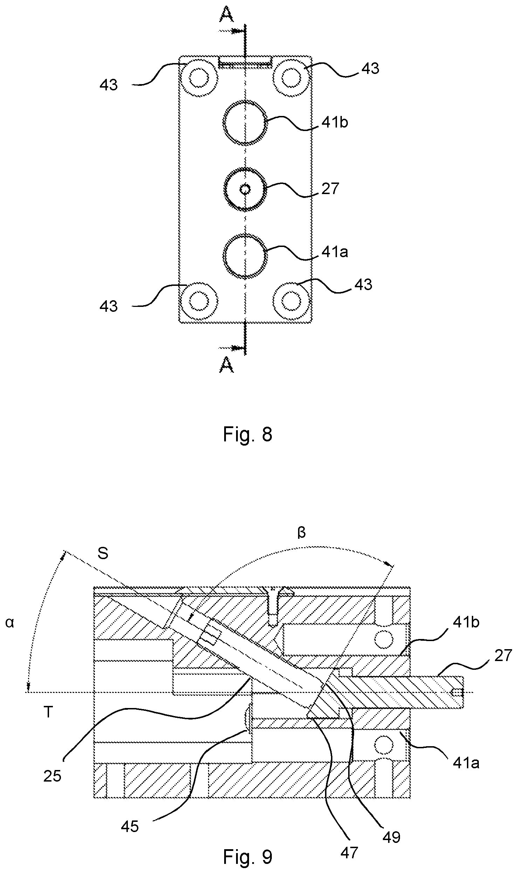

Dieser Spannstab 27 stellt, wie in Fig. 3, Fig. 4 und insbesondere Fig. 9 dargestellt, das abtriebsseitige Element eines Keilgetriebes dar, welches in dem Spannbock 19a,b in einer entsprechenden Bohrung in Längsrichtung verschiebbar geführt ist. Im Inneren des Spannbocks 19a,b weist der Spannstab 27 im Endbereich im Querschnitt eine vorzugsweise vergrößerte Keilform auf, auf dessen abschließende Schräge bzw. Keilfläche 49 vorzugsweise senkrecht hierzu (β = 90°) ein antriebsseitiges Element in Form einer Kugeldruckschraube 25 angreift.

Diese Kugeldruckschraube 25 kann in einer entsprechenden Bohrung mit Innengewinde mittels Schraubbewegung eines in dessen Kopf (beispielsweise Inbus ^{®}, Torx ^{®}, etc.) einsetzbaren Steckschlüssels 26 weiter ein- oder herausgeschraubt werden, so dass das Spannelement 27 entsprechend über die Keilfläche vorgeschoben (Spannen des Bandes 11) oder zurückgeschoben (Entspannen des Bandes) werden kann. Selbst wenn keine zusätzliche Feder im Spannbock 19a,b am Spannstab 27 vorgesehen sein sollte, wird die Rückbewegung des Spannstabs 27 durch die Elastizität (Entspannung) des Bands 11 bewirkt.

Wie in Fig. 9 dargestellt, greift die Kugeldruckschraube 25 vorzugsweise senkrecht und damit in einem Winkel α zur Förderrichtung an dem entsprechenden Keil 47 des Spannstabs 27 an. In diesem Fall entspricht der wirksame Winkel der Keilfläche 49 (bezügliche einer Achse senkrecht zur Förderebene), der für das Maß der Untersetzung verantwortlich ist, dem Winkel α der Rotationsachse S der Kugeldruckschraube 25 zur Förderrichtung bzw. Mittelachse T des Spannstabs 27.

In der dargestellten bevorzugten Ausgestaltung beträgt der Winkel α gleich 30°, wobei selbstverständlich auch andere Winkel in Abhängigkeit des gewünschten Verschiebewegs des Spannstabs 27 entsprechend dem Maß der Dehnbarkeit des Bands 11 möglich sind. Zur Sicherung der rückwärtigen Bewegung des Spannstabs 27 dient eine Schraube 46 als Verliersicherung.

Die Spannböcke 19a und 19b dienen, wie in Fig. 5 dargestellt, vorzugsweise auch der Verbindung zu dem Querträger 31b, die ebenfalls wie die Verbindung zu den Längsträgern 21a und 21b mittels Schrauben erfolgen kann. Hierdurch erhöht sich vorteilhafterweise die Stabilität der Anordnung der Spannböcke 19a,b.

An den gegenüberliegenden Ecken sind die Längsträger 21a und 21b mit den Enden des Querträgers 31a mittels Quadern (ebenso wie die Spannböcke 19a,b aus einem festeren Material, z.B. Stahl) miteinander verbunden und bilden einen Rahmen. Im Unterschied zu den Quadern und den Spannböcken 19a,b bestehen die Längs- und Querträger 21a,b und 31a,b in Form von Seitenholmen aus Aluminium-Strangpressprofilen, die je nach gewünschter Bandlänge und Bandbreite abgelängt werden. Auf diese Weise wird eine modulare Konstruktion des Rahmens (inklusive der Rollen 13 und 15) mit integrierter Verstell- und Bandjustagemechanik (Bandspannung und Geradeauslauf) ermöglicht.

In bevorzugter Ausgestaltung werden alle Holme (Längs- und Querträger) als Strangpressprofil nur abgelängt, so dass vorteilhafterweise alle Bearbeitungen an den Quadern und Spannböcken 19a,b erfolgen.

Zusätzlich kann, wie aus Fig. 6 ersichtlich, an oder auf der Rahmenkonstruktion eine dünne Auflageplatte, beispielsweise mittels Schrauben befestigt sein, um ein das zu fördernde Gut tragendes oberes Trum des Endlosbands 11 zu unterstützen, was auch die Stabilität des Rahmens weiter erhöht.

Um ein Verschmutzen der oberen Öffnung des Spannbocks 19a,b, durch welche ein Steckschlüssel zum Einstellen des Verschiebwegs des Spannstabs 27 angesetzt werden kann, zu verhindern, ist diese Öffnung, wie in Fig. 6 dargestellt, durch ein Abdeckblech 35 bzw. eine Schmutzabdeckung verschlossen. Um die Öffnung freizulegen, wird eine Schraube 39 eines Klemmblechs 37 gelöst, so dass das Abdeckblech 35 unter das Klemmblech 37 in Längsrichtung T weiter eingeschoben wird und den Zugang zur Kugeldruckschraube 25 freigibt.

### Bezugszeichenliste

- 1: Wägebandförderer
- 3: Wägeauflage in Form eines Bandförderers
- 5: Auflagetisch
- 7: Wägezelle
- 9: Trägerteil
- 11: Endlosband
- 13: angetriebene Rolle
- 13a: Rollenlager
- 13b: Rollenlager
- 15: Rolle
- 15a: Rollenlager
- 15b: Rollenlager
- 17: Antrieb
- 19a: Einstellvorrichtungen, -module in Form eines Spannbocks
- 19b: Einstellvorrichtungen, -module in Form eines Spannbocks
- 21a: Längsträger in Form von Längsholmen
- 21b: Längsträger in Form von Längsholmen
- 23: Schrauben
- 25: erstes antriebsseitiges Element in Form einer Kugeldruckschraube
- 26: Steckschlüssel
- 27: zweites abtriebsseitiges Element in Form eines Spannstabs
- 29a: Führungsbolzen
- 29b: Führungsbolzen
- 31a: Querträger in Form von Querholmen
- 31b: Querträger in Form von Querholmen
- 33: Auflageplatte in Form eines dünnen Blechs
- 35: Abdeckblech
- 37: Klemmblech
- 39: Schraube
- 41a: Bohrungen für Führungsbolzen
- 41b: Bohrungen für Führungsbolzen
- 43: Bohrungen für Schrauben 23
- 45: Schraube als Verliersicherung
- 47: Keil
- 49: Keilfläche, bzw. -schräge
- R: Rollenachse
- S: Rotationsachse des Einstellelements 25
- T: Mittelachse des Spannstabs 27
- α: Anstellwinkel S zu T von 30°
- β: 90° Winkel von S zu Keilfläche bzw. -schräge

## Patentansprüche

1. Bandförderer, insbesondere Wägebandförderer, für ein zu förderndes Gut,
a) mit einem aus wenigstens einem Längsträger (21a, 21b) und wenigstens einem Querträger (31a, 31b) aufgebauten Rahmen oder einer Aufnahmeplatte,
b) mit zwei am Rahmen oder der Platte gelagerten Rollen (13, 15),
c) mit einem um die zwei Rollen (13, 15) geführten antreibbaren Endlosband (11),
d) wobei die zwei Rollen (13, 15) in Förderrichtung (T) zueinander verschiebbar gehaltert sind,
e) wobei zum Einstellen des Verschiebewegs wenigstens eine Einstellvorrichtung (19a, 19b) vorgesehen ist, die an einem Ende der Platte oder am Ende des wenigstens einen Längsträgers (21a, 21b) oder innerhalb dieses Längsträgers (21a, 21b) angeordnet ist und
f) die Einstellvorrichtung (19a, 19b) ein drehbares Einstellelement (25) aufweist, dessen Rotationsachse (S) in Bezug zur Förderebene von schräg oben oder schräg unten in einem Winkel größer als 0° und kleiner als 90° liegt, um eine Justage der Bandspannung auch nach Montage des Endlosbands (11) zu ermöglichen,
**dadurch gekennzeichnet, dass**
g) die Einstellvorrichtung (19a, 19b) als eigenständiges Modul ausgebildet ist und zur ortsfesten Verbindung mit dem Rahmen oder der Platte hierzu komplementäre Befestigungsmittel (23) aufweist.

2. Bandförderer nach Anspruch 1, **dadurch gekennzeichnet, dass** die Rotationsachse (S) des Einstellelements (25) im Wesentlichen senkrecht zur Rollenachse (R) liegt.

3. Bandförderer nach Anspruch 1 oder 2, **dadurch gekennzeichnet, dass** die Einstellvorrichtung (19a, 19b) als Keilgetriebe ausgebildet ist, mit einem abtriebsseitigen ersten Element (27), das in Richtung des Verschiebewegs (T) wirkt und einem als antriebsseitiges zweites Element (25) ausgebildeten Einstellelement, das das erste abtriebsseitige Element (27) unter einem Winkel größer 0° und kleiner 90°, vorzugsweise kleiner 45°, insbesondere kleiner gleich 30° und im Wesentlichen senkrecht zur Rollenachse (R) angreift.

4. Bandförderer nach Anspruch 3, **dadurch gekennzeichnet, dass** das Keilgetriebe eine keilförmige wirksame Fläche (49) mit einem Winkel kleiner gleich 45°, vorzugsweise kleiner gleich 30°, aufweist.

5. Bandförderer nach Anspruch 3 oder 4, **dadurch gekennzeichnet, dass** das Keilgetriebe eine keilförmige wirksame Fläche (49) mit einem Winkel aufweist, dessen Größe in Abhängigkeit der Dehnbarkeit des Endlosbandes (11) ausgewählt wird.

6. Bandförderer nach einem der vorhergehenden Ansprüche, **dadurch gekennzeichnet, dass** der Rahmen aus zwei Längsträgern (21a, 21b) und zwei Querträgern (31a, 31b) aufgebaut ist und zwei Einstellvorrichtungen (19a, 19b) an den Enden der Längsträger (21a, 21b) angeordnet sind.

7. Bandförderer nach Anspruch 5, **dadurch gekennzeichnet, dass** der Rahmen zusätzlich eine Aufflageplatte (33) zur Unterstützung des das zu fördernde Gut tragenden oberen Trums des Endlosbands (11) umfasst.

8. Bandförderer nach Anspruch 7, **dadurch gekennzeichnet, dass** die als eigenständiges Modul ausgebildete Einstellvorrichtung (19a, 19b) aneinander grenzende Längsträger (21a, 21b) und Querträger (31a, 31b) des Rahmens miteinander verbindet.

9. Bandförderer nach Anspruch 7 oder 8, **dadurch gekennzeichnet, dass** die als eigenständiges Modul ausgebildete Einstellvorrichtung (19a, 19b) alleinig zwischen Rahmen oder Platte und Rolle liegt.

10. Einstellvorrichtung zum Einsatz in einem Bandförderer (1) nach einem der vorhergehenden Ansprüche, **dadurch gekennzeichnet, dass** die Einstellvorrichtung (19a, 19b) als eigenständiges Modul ausgebildet ist und zur ortsfesten Verbindung mit dem Rahmen oder der Platte hierzu komplementäre Befestigungsmittel (23) aufweist.

## Claims

1. Belt conveyor, in particular weighing conveyor, for a material to be conveyed,
a) comprising a frame constructed from at least one longitudinal member (21a, 21b) and at least one cross member (31a, 31b), or a receiving plate,
b) comprising two rollers (13, 15) mounted on the frame or the plate,
c) comprising a drivable endless belt (11) guided around the two rollers (13, 15),
d) the two rollers (13, 15) being held displaceably relative to one another in the conveying direction (T),
e) at least one adjusting device (19a, 19b) being provided for adjusting the displacement path and being arranged at one end of the plate or at the end of the at least one longitudinal member (21a, 21b) or within this longitudinal member (21a, 21b), and
f) the adjusting device (19a, 19b) having a rotatable adjusting element (25) of which the axis of rotation (S) in relation to the conveying plane lies from obliquely above or obliquely below at an angle greater than 0° and less than 90°, in order to allow the belt tension to be adjusted even after the endless belt (11) has been assembled,
**characterized in that**
g) the adjusting device (19a, 19b) is designed as an independent module and has complementary fastening means (23) for connecting to the frame or the plate in a stationary manner.

2. Belt conveyor according to claim 1, **characterized in that** the axis of rotation (S) of the adjusting element (25) is substantially perpendicular to the roller axis (R).

3. Belt conveyor according to either claim 1 or claim 2, **characterized in that** the adjusting device (19a, 19b) is designed as a wedge gear, comprising an output-side first element (27) which acts in the direction of the displacement path (T) and an adjusting element which is designed as a drive-side second element (25) and is in contact with the first output-side element (27) at an angle greater than 0° and less than 90°, preferably less than 45°, in particular less than or equal to 30° and substantially perpendicular to the roller axis (R).

4. Belt conveyor according to claim 3, **characterized in that** the wedge gear has a wedge-shaped effective surface (49) having an angle less than or equal to 45°, preferably less than or equal to 30°.

5. Belt conveyor according to either claim 3 or claim 4, **characterized in that** the wedge gear has a wedge-shaped effective surface (49) having an angle whose size is selected on the basis of the stretchability of the endless belt (11).

6. Belt conveyor according to any of the preceding claims,
**characterized in that** the frame is constructed from two longitudinal members (21a, 21b) and two cross members (31a, 31b) and two adjusting devices (19a, 19b) are arranged at the ends of the longitudinal members (21a, 21b).

7. Belt conveyor according to claim 5, **characterized in that** the frame additionally comprises a support plate (33) for supporting the upper strand of the endless belt (11), which strand supports the material to be conveyed.

8. Belt conveyor according to claim 7, **characterized in that** the adjusting device (19a, 19b) designed as an independent module connects the longitudinal members (21a, 21b) and cross members (31a, 31b) of the frame to each other.

9. Belt conveyor according to either claim 7 or claim 8, **characterized in that** the adjusting device (19a, 19b) designed as an independent module is located solely between the frame or the plate and the roller.

10. Adjusting device for use in a belt conveyor (1) according to any of the preceding claims, **characterized in that** the adjusting device (19a, 19b) is designed as an independent module and has complementary fastening means (23) for connecting to the frame or the plate in a stationary manner.

## Revendications

1. Transporteur à courroie, en particulier transporteur de pesage à courroie, pour un produit à transporter,
a) comportant un cadre ou une plaque de réception constitué d'au moins une poutre longitudinale (21a, 21b) et d'au moins une poutre transversale (31a, 31b),
b) comportant deux rouleaux (13, 15) montés sur le cadre ou la plaque,
c) comportant une courroie sans fin (11) pouvant être entraînée autour des deux rouleaux (13, 15),
d) dans lequel les deux rouleaux (13, 15) sont maintenus de manière à pouvoir être déplacés l'un par rapport à l'autre dans le sens de transport (T),
e) dans lequel au moins un dispositif de réglage (19a, 19b) permettant de régler la course de déplacement est prévu, lequel est disposé à une extrémité de la plaque ou à une extrémité de l'au moins une poutre longitudinale (21a, 21b) ou à l'intérieur de ladite poutre longitudinale (21a, 21b) et
f) le dispositif de réglage (19a, 19b) présente un élément de réglage (25) rotatif dont l'axe de rotation (S) est situé incliné vers le haut ou incliné vers le bas par rapport au plan de transport à un angle supérieur à 0° et inférieur à 90° pour permettre un ajustement de la tension de courroie même après le montage de la courroie sans fin (11),
**caractérisé en ce que**
g) le dispositif de réglage (19a, 19b) est réalisé en tant que module autonome et présente des moyens de fixation (23) pour la liaison fixe complémentaires au cadre ou à la plaque.

2. Transporteur à courroie selon la revendication 1, **caractérisé en ce que** l'axe de rotation (S) de l'élément de réglage (25) est sensiblement perpendiculaire à l'axe de rouleau (R).

3. Transporteur à courroie selon la revendication 1 ou 2,
**caractérisé en ce que** le dispositif de réglage (19a, 19b) est réalisé en tant que transmission à clavette comportant un premier élément (27) côté sortie agissant dans la direction de la course de déplacement (T) et un élément de réglage réalisé en tant que second élément (25) côté entrée, lequel est en prise avec le premier élément (27) côté sortie sous un angle supérieur à 0° et inférieur à 90°, de préférence inférieur à 45°, en particulier inférieur ou égal à 30° et sensiblement perpendiculaire à l'axe de rouleau (R).

4. Transporteur à courroie selon la revendication 3, **caractérisé en ce que** la transmission à clavette présente une surface efficace (49) en forme de clavette comportant un angle inférieur ou égal à 45°, de préférence inférieur ou égal à 30°.

5. Transporteur à courroie selon la revendication 3 ou 4, **caractérisé en ce que** la transmission à clavette présente une surface efficace (49) en forme de clavette comportant un angle dont la grandeur est choisie en fonction de la ductilité de la courroie sans fin (11).

6. Transporteur à courroie selon l'une des revendications précédentes, **caractérisé en ce que** le cadre est constitué de deux poutres longitudinales (21a, 21b) et de deux poutres transversales (31a, 31b) et deux dispositifs de réglage (19a, 19b) sont disposés aux extrémités des poutres longitudinales (21a, 21b).

7. Transporteur à courroie selon la revendication 5, **caractérisé en ce que** le cadre comprend en outre une plaque de support (33) permettant de soutenir le brin supérieur de la courroie sans fin (11) portant le produit à transporter.

8. Transporteur à courroie selon la revendication 7, **caractérisé en ce que** le dispositif de réglage (19a, 19b) réalisé en tant que module autonome relie entre elles des poutres longitudinales (21a, 21b) et des poutres transversales (31a, 31b) du cadre adjacentes les unes aux autres.

9. Transporteur à courroie selon la revendication 7 ou 8, **caractérisé en ce que** le dispositif de réglage (19a, 19b) réalisé en tant que module autonome se trouve seul entre le cadre ou la plaque et le rouleau.

10. Dispositif de réglage destiné à être utilisé dans un transporteur à courroie (1) selon l'une des revendications précédentes, **caractérisé en ce que** le dispositif de réglage (19a, 19b) est réalisé en tant que module autonome et présente des moyens de fixation (23) pour la liaison fixe complémentaires au cadre ou à la plaque.
